# EUROPÄISCHE PATENTSCHRIFT

(11) **EP 3 556 107 B1**
(45) Veröffentlichungstag und Bekanntmachung des Hinweises auf die Patenterteilung: **16.09.2020**
(21) Anmeldenummer: 17797592.7
(22) Anmeldetag: 02.11.2017
(51) Int. Cl.: H04Q 9/00, F16G 1/00

(54) **RIEMEN MIT DATENÜBERTRAGUNGSEINRICHTUNG**
BELT HAVING A DATA-TRANSFERRING DEVICE
COURROIE À DISPOSITIF DE TRANSMISSION DE DONNÉES

(30) Priorität: 15.12.2016 DE 102016225185
(43) Veröffentlichungstag der Anmeldung: 23.10.2019
(73) Patentinhaber: ContiTech Antriebssysteme GmbH, 30165 Hannover (DE)
(72) Erfinder: FISS, Tim, 30519 Hannover (DE); RECK, Siegfried, 31582 Nienburg / Weser (DE); LÜKER, Svenja, 30419 Hannover (DE)
(74) Vertreter: Preusser, Andrea
(86) Internationale Anmeldenummer: PCT/EP2017/077991
(87) Internationale Veröffentlichungsnummer: WO 2018/108381

(56) Entgegenhaltungen:
- EP-A1- 2 157 334
- DE-A1-102009 003 732
- DE-A1-102010 002 551

## Beschreibung

Die Erfindung betrifft einen Riemen mit einer Eingriffsfläche und einer Rückenfläche, aufweisend eine Datenübertragungseinrichtung, wobei die Datenübertragungseinrichtung mindestens einen Sensor mit einer Energieversorgung und mindestens ein externes Lesegerät aufweist, wie zum Beispiel in DE 10 2009 003732 A1 offenbart.

Die zustandsabhängige Wartung technischer Systeme stützt sich in zunehmendem Maße auf Komponenten, die ihren Zustand selbst erfassen und diesen mitteilen können. Für dieses "self-reporting" werden die Komponenten mit intelligenter Elektronik ausgestattet, die Messungen (z. B. der Temperatur) durchführt und die Ergebnisse an übergeordnete Systeme überträgt. Am Markt verfügbar sind z. B. RFID-Transponder (Radio Frequency Identification) mit integrierter Messfunktion, die ihre Daten per Funk im UHF-Frequenzband (Ultra High Frequency) an ein externes Lesegerät übertragen.

Die RFID-Transponder eignen sich nur bedingt für den Einsatz in Riemen und Transportbändern, wenn diese mit hohen Geschwindigkeiten umlaufen, weil sich der Transponder für die Dauer der Energie- und Datenübertragung in der Reichweite des externen Lesegerätes bzw. dessen Antenne befinden muss. Bei geringer Reichweite und hohen Umlaufgeschwindigkeiten reicht das verfügbare Zeitfenster nicht aus, um die Datentelegramme vollständig zu übertragen.

Die elektromagnetischen Eigenschaften, wie beispielsweise Permeabilität oder Permittivität der Werkstoffe des Riemens verstimmen den RFID-Transponder so stark, dass seine Antenne individuell an die stoffliche Umgebung angepasst werden muss.

Der Erfindung liegt die Aufgabe zugrunde, die eingangs erwähnte Datenübertragungseinrichtung derartig auszugestalten, dass Daten von einem sich bewegenden Riemen auf einen stationären Empfänger sicher übertragbar sind.

Diese Aufgabe wird dadurch gelöst, dass auf der Rückenfläche des Riemens in Laufrichtung des Riemens beabstandete Signalflächen angeordnet sind, und jede Signalfläche durch den Sensor entweder in einen ersten aktiven Zustand oder in einen zweiten inaktiven Zustand schaltbar ist, wobei bei dem ersten aktiven Zustand ein positives Signal übertragbar ist und bei dem zweiten inaktiven Zustand entweder ein negatives oder kein Signal übertragbar ist und der jeweilige Zustand der Signalflächen bei sich bewegenden Riemen im Vorbeilauf vom externen Lesegerät erfassbar ist.

Durch die Signalflächen sind jeweils entweder "1"- oder ein "0"- Zustände übertragbar, ähnlich digitaler Schalter. Die Signalabfolge der Signalflächen bei sich bewegendem Riemen ist im Vorbeilauf durch das externe Lesegerät erfassbar, wobei aus der Signalfolge ein aus der elektronischen Datenverarbeitung bekanntes binäres Wort erzeugbar ist. Dieses Wort ist mittels geeigneter Elektronik als das vom Sensor erfasste und übertragene Signal interpretierbar.

In einer Weiterbildung der Erfindung weist der Riemen auf der Rückenfläche zusätzlich eine Bezugsfläche auf und ist zwischen der Bezugsfläche und den einzelnen Signalflächen durch den Sensor jeweils eine elektrische Spannung aufschaltbar, wobei jede spannungsbeaufschlagte Signalfläche in den aktiven Zustand geschaltet ist und jede Signalfläche ohne Spannungsbeaufschlagung in den inaktiven Zustand geschaltet ist.

Das bei Spannungsbeaufschlagung entstehende elektrische Feld ist durch entsprechende Lesegeräte erfassbar. Im Vorbeilauf des sich bewegenden Riemens ist so eine Signalfolge erzeugbar, die, in ein binäres Wort umgewandelt, den zu übertragenden Messwert des Sensors repräsentiert.

In einer Weiterbildung der Erfindung ist die elektrische Spannung eine Gleichspannung.

Zur Beaufschlagung mit einer Gleichspannung ist nur eine sehr einfache Ansteuerungselektronik des Sensors erforderlich.

In einer Weiterbildung der Erfindung ist die elektrische Spannung eine Wechselspannung mit einer vorbestimmten Wechselfrequenz.

Elektrische Wechselspannungen erzeugen Wechselfelder, deren Frequenz so bemessbar ist, dass in dem Zeitraum der Überlappung der Signalflächen mit dem Lesegerät mindestens zehn Amplitudenwechsel liegen. Diese Variante hat den Vorteil, dass das Lesegerät auf die gewählte Frequenz abstimmbar ist, um Störungen auszublenden, beispielsweise durch Filterung, Synchrongleichrichtung etc.

In einer Weiterbildung der Erfindung sind die Signalflächen magnetisierbar ausgebildet, wobei die Polung der magnetisierten Signalflächen durch den Sensor umschaltbar ist und eine vorgegebene Polung der einzelnen Signalflächen dem aktivierten Zustand der betreffenden Signalfläche zugeordnet ist.

Auch die magnetische Polung der einzelnen Signalflächen ist mit entsprechenden Erfassungsgeräten möglich, so dass ein dem Sensorsignal entsprechendes binäres Wort erfassbar ist. Vorteilhaft dabei ist, dass auch eine binäre "0" durch ein entsprechendes aktives Signal der Signalflächen erzeugbar ist. Dadurch ist die Gefahr von Fehlinterpretationen, beispielsweise durch Nichterkennung einer inaktiven Signalfläche reduzierbar.

In einer Weiterbildung der Erfindung sind die Signalflächen optisch reflektierend ausgebildet und mit einer elektrisch leitfähigen Pigmentschicht beschichtet, wobei durch Anlegen einer elektrischen Spannung an die Pigmente die Ausrichtung der Pigmente veränderbar ist.

Diese Lösung ermöglicht ist, ähnlich wie beim elektronischen Papier, die Reflexion der Signalflächen durch das Anlegen einer Spannung an die Pigmente zu beeinflussen. Dadurch ist es möglich, Lichtreflexionen der einzelnen Signalflächen je nach Signal des Sensors zuzulassen oder zu verhindern. Mittels eines geeigneten Lesegerätes sind so binäre Werte erfassbar, die den vom Sensor zu übertragenden Werten entsprechen.

In einer Weiterbildung der Erfindung sind die Signalflächen Leuchtdioden.

Leuchtdioden haben den Vorteil, dass auch bei ungünstigen Betriebsverhältnissen eine sichere Erkennung der Signalzustände der Signalflächen gegeben ist. Es bleibt dem jeweiligen Einsatzfall vorbehalten, wie die Leuchtdioden mit der entsprechenden Energie versorgt war sind, beispielsweise durch elektrische Induktion von außen oder Energy Harvesting durch entsprechen Bauteile im Riemen.

In einer Weiterbildung der Erfindung weist der Riemen eine zusätzliche Triggerfläche auf, die in Laufrichtung vor den Signalflächen auf der Rückenfläche des Riemens angeordnet ist und über die beim Vorbeilauf der Triggerfläche an dem Lesegerät der Sensor zur Abgabe von Steuersignalen an die Signalflächen für eine vorbestimmte Zeit ansteuerbar ist.

Auf diese Weise gibt der Sensor nur Signale ab, wenn die Signalflächen am Lesegerät vorbei laufen. Dadurch kann Energie eingespart werden.

Da pro Signalflächen nur eine binäre Information übertragbar ist, ist die Informationsdichte auch bei schnellem Vorbeilauf der Signalflächen am Lesegerät derart gering, dass eine sichere Erfassung der Zustände der Signalflächen möglich ist. Daher ist auch bei schnelllaufenden Riemen eine sichere Erfassung der vom Sensor zu übertragenden Daten gewährleistet.

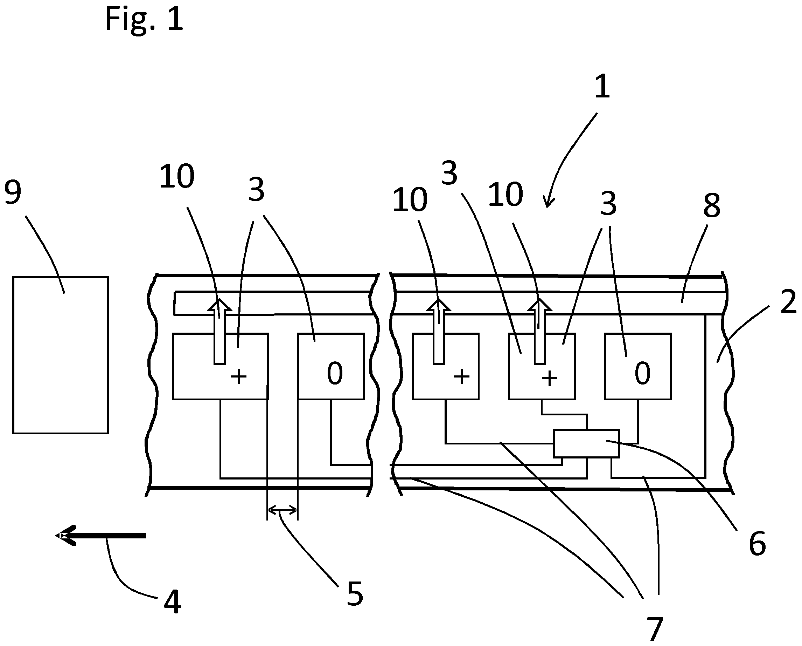

Anhand der Zeichnung wird nachstehend ein Beispiel der Erfindung näher erläutert. In der Figur 1 ist ein Riemen 1 in einer prinzipiellen Draufsicht gezeigt. Der Riemen 1 weist auf seiner Rückenfläche 2 eine Anzahl von Signalflächen 3 auf. Die Signalflächen 3 sind alle von gleicher Form und Größe. Zwischen den Signalflächen 3 ist in Laufrichtung 4 des Riemens 1 jeweils ein Abstand 5 angeordnet. Mittels eines Sensors 6 sind verschiedene Messgrößen, beispielsweise Temperatur oder Lastwechselzahl am Riemen 1 messbar. Der Sensor 6 ist mittels elektrischer Leiter 7 sowohl mit jeder Signalfläche 3 als auch mit einer Bezugsfläche 8 verbunden. Der Sensor 6 weist eine nicht gezeigte elektrische Recheneinheit auf, mittels derer seine Messdaten in binäre Datenworte um wandelbar sind. Die Anzahl der Bits der binären Datenworte korrespondiert mit der Anzahl der Signalflächen 3. Jedem Bit der Datenworte ist eine Signalfläche 3 zugeordnet.

Ein Lesegerät 9 ist von der Rückenfläche 2 des Riemens 1 beabstandet angeordnet und korrespondiert in seiner Lage relativ zu den Signalflächen 3 mit den Signalflächen 3 derart, dass bei in Laufrichtung 4 sich bewegendem Riemen 1 die Signalflächen 3 sequenziell das Lesegerät 9 passieren.

Durch den Sensor 6 ist über die elektrischen Leiter 7 zwischen der Bezugsfläche 8 und den Signalflächen 3 jeweils separat eine elektrische Spannung anlegbar. Für jede Signalfläche 3 repräsentiert dabei eine angelegte Spannung den binären Wert "1". Diese Signalflächen 3 sind hier beispielhaft ausgewählt und mit einem "+" als aktiv gekennzeichnet. Liegt keine Spannung an, repräsentiert dies den Wert "0". Die betreffenden Schaltflächen sind hier ebenfalls beispielhaft ausgewählt, allerdings mit einer "0" symbolisiert.

Durch eine angelegte Spannung ist an der jeweiligen Signalfläche 3 ein elektrisches Feld 10 erzeugbar, die betreffende Signalfläche 3 ist damit "aktiv". Liegt keine Spannung an, ist kein elektrisches Feld vorhanden, die betreffende Signalfläche ist "inaktiv".

Passieren die Signalflächen 3 das Lesegerät 9, ist durch die elektrischen Felder der aktivierten Signalflächen 3 im Lesegerät 9 ein elektrischer Impuls erzeugbar. Passiert eine inaktive Schaltfläche, wird kein Impuls im Lesegerät 9 erzeugt.

Ein erzeugter Impuls ist vom Lesegerät 9 als binäre "1" interpretierbar. Durch die Abfolge der das Lesegerät 9 passierenden Signalflächen 3 ist aus den einzelnen Zuständen der Signalflächen 3 im Lesegerät 9 ein binäres Datenwort bildbar, welches mit dem vom Sensor 6 erzeugten Datenwort übereinstimmt.

Auf einfache Weise ist dadurch auch bei hohen Laufgeschwindigkeiten des Riemens 1 eine sichere, berührungslose Erfassung der vom Sensor 6 erfassten Daten sichergestellt.

Die erfindungsgemäße Ausführung beschränkt sich jedoch nicht auf die Übertragung mittels elektrischer Felder. So können die Signalflächen 3 auch als magnetisierbare Elemente ausgebildet sein, wobei die Polarität der Magnetisierung durch eine vom Sensor 6 an die Signalflächen 3 angelegte Spannung veränderbar ist.

Durch das Lesegerät 9 ist dann das von den Signalflächen 3 ausgehende magnetische Feld erfassbar, wobei eine vorgegebene Feldlinienausbildung einer aktiven Signalfläche 3, also einer binären "1"zuzuordnen ist. Alle anderen Feldausbildungen entsprechend an einer binären "0".

Vorteilhaft dabei ist, dass auch eine binäre "0" durch ein entsprechendes aktives Signal der Signalflächen 3 erzeugbar ist. Dadurch ist die Gefahr von Fehlinterpretationen bei der Datenerfassung verringert.

Die Signalflächen 3 können auch als lichtreflektierende Elemente ausgebildet sein, auf die eine hier nicht gezeigte Pigmentschicht aufgetragen ist. Die Ausrichtung der hier nicht gezeigten Pigmente ist durch eine elektrische Spannung, die vom Sensor 6 erzeugbar ist, veränderbar. So ist die Reflexionsfähigkeit der Signalflächen 3 entsprechend beeinflussbar, wie es bereits bei elektronischem Papier bekannt ist.

Durch das Lesegerät 9 sind dann entsprechend Reflexionswerte erfassbar, wobei entsprechend vorbestimmte Reflexionswerte beispielsweise den binären Wert "1" repräsentieren. Die Signalflächen 3 können auch als Leuchtdioden ausgebildet sein, wobei die Leuchtdioden 3 von einer hier nicht gezeigten Energiequelle mit Energie versorgt war sind. Hier ist beispielsweise über Induktion eine externe Energieversorgung möglich, die hier jedoch nicht gezeigt ist.

Leuchtdioden haben den Vorteil, dass auch bei ungünstigen Betriebsverhältnissen eine gute Datenerfassung möglich ist, da die Leuchtdioden bei entsprechendem Signal aktiv leuchten.

### Bezugszeichenliste

### (Teil der Beschreibung)

- 1: Riemen
- 2: Rückenfläche des Riemens 1
- 3: Signalflächen
- 4: Laufrichtung des Riemens 1
- 5: Abstand zwischen den Signalflächen 3
- 6: Sensor
- 7: elektrische Leiter
- 8: Bezugsfläche
- 9: Lesegerät
- 10: elektrisches Feld

## Patentansprüche

1. Riemen (1) mit einer Eingriffsfläche und einer Rückenfläche (2), aufweisend eine Datenübertragungseinrichtung (3, 6, 7, 8, 9, 10), wobei die Datenübertragungseinrichtung (3, 6, 7, 8, 9, 10) mindestens einen Sensor (6) mit einer Energieversorgung und mindestens ein externes Lesegerät (9) aufweist, **dadurch gekennzeichnet, dass** auf der Rückenfläche (2) des Riemens (1) in Laufrichtung des Riemens (1) beabstandete Signalflächen (3) angeordnet sind, und jede Signalfläche (3) durch den Sensor (6) entweder in einen ersten aktiven Zustand oder in einen zweiten inaktiven Zustand schaltbar ist, wobei bei dem ersten aktiven Zustand ein positives Signal übertragbar ist und bei dem zweiten inaktiven Zustand entweder ein negatives oder kein Signal übertragbar ist und der jeweilige Zustand der Signalflächen (3) bei sich bewegenden Riemen (1) im Vorbeilauf vom externen Lesegerät (9) erfassbar ist.

2. Riemen (1) nach Anspruch 1, **dadurch gekennzeichnet, dass** der Riemen (1) auf der Rückenfläche (2) zusätzlich eine Bezugsfläche (8) aufweist und zwischen der Bezugsfläche (8) und den einzelnen Signalflächen (3) durch den Sensor (6) jeweils eine elektrische Spannung aufschaltbar ist, wobei jede spannungsbeaufschlagte Signalfläche (3) in den aktiven Zustand geschaltet ist und jede Signalfläche (3) ohne Spannungsbeaufschlagung in den inaktiven Zustand geschaltet ist.

3. Riemen (1) nach Anspruch 2, **dadurch gekennzeichnet, dass** die elektrische Spannung eine Gleichspannung ist.

4. Riemen (1) nach Anspruch 2, **dadurch gekennzeichnet, dass** die elektrische Spannung eine Wechselspannung mit einer vorbestimmten Wechselfrequenz ist

5. Riemen (1) nach Anspruch 1, **dadurch gekennzeichnet, dass** die Signalflächen (3) magnetisierbar ausgebildet sind, wobei die Polung der magnetisierten Signalflächen (3) durch den Sensor (6) umschaltbar ist und eine vorgegebene Polung der einzelnen Signalflächen (3) dem aktivierten Zustand der betreffenden Signalfläche (3) zugeordnet ist.

6. Riemen (1) nach Anspruch 1, **dadurch gekennzeichnet, dass** die Signalflächen (3) optisch reflektierend ausgebildet und mit einer elektrisch leitfähigen Pigmentschicht beschichtet sind, wobei durch Anlegen einer elektrischen Spannung an die Pigmente die Ausrichtung der Pigmente veränderbar ist.

7. Riemen (1) nach Anspruch 1, **dadurch gekennzeichnet, dass** die Signalflächen (3) Leuchtdioden sind.

8. Riemen (1) nach mindestens einem der vorstehenden Ansprüche, **dadurch gekennzeichnet, dass** der Riemen (1) eine zusätzliche Triggerfläche aufweist, die in Laufrichtung vor den Signalflächen (3) auf der Rückenfläche (2) des Riemens (1) angeordnet ist und über die beim Vorbeilauf der Triggerfläche an dem Lesegerät (9) der Sensor (6) zur Abgabe von Steuersignalen an die Signalflächen (3) für eine vorbestimmte Zeit ansteuerbar ist.

## Claims

1. Belt (1) having an operative surface and a rear surface (2), having a data transmission device (3, 6, 7, 8, 9, 10), wherein the data transmission device (3, 6, 7, 8, 9, 10) has at least one sensor (6) having an energy supply and at least one external reader (9), **characterized in that** spaced signal surfaces (3) are arranged on the rear surface (2) of the belt (1) in the running direction of the belt (1), and each signal surface (3) is able to be switched either into a first active state or into a second inactive state by the sensor (6), wherein a positive signal is able to be transmitted in the first active state and either a negative signal or no signal is able to be transmitted in the second inactive state, and the respective state of the signal surfaces (3) is able to be acquired by the external reader (9) when the moving belt (1) runs past.

2. Belt (1) according to Claim 1, **characterized in that** the belt (1) additionally has a reference surface (8) on the rear surface (2) and an electric voltage is in each case able to be connected between the reference surface (8) and the individual signal surfaces (3) by way of the sensor (6), wherein each signal surface (3) with an applied voltage is switched into the active state and each signal surface (3) without an applied voltage is switched into the inactive state.

3. Belt (1) according to Claim 2, **characterized in that** the electric voltage is a DC voltage.

4. Belt (1) according to Claim 2, **characterized in that** the electric voltage is an AC voltage having a predetermined alternating frequency.

5. Belt (1) according to Claim 1, **characterized in that** the signal surfaces (3) are designed so as to be magnetizable, wherein the polarity of the magnetized signal surfaces (3) is able to be switched by the sensor (6) and a predefined polarity of the individual signal surfaces (3) is associated with the activated state of the signal surface (3) in question.

6. Belt (1) according to Claim 1, **characterized in that** the signal surfaces (3) are designed so as to be optically reflective and coated with an electrically conductive pigment layer, wherein the alignment of the pigments is able to be changed by applying an electric voltage to the pigments.

7. Belt (1) according to Claim 1, **characterized in that** the signal surfaces (3) are light-emitting diodes.

8. Belt (1) according to at least one of the preceding claims, **characterized in that** the belt (1) has an additional trigger surface that is arranged in front of the signal surfaces (3) on the rear surface (2) of the belt (1) in the running direction and by way of which, when the trigger surface runs past the reader (9), the sensor (6) is able to be driven so as to output control signals to the signal surfaces (3) for a predetermined time.

## Revendications

1. Courroie (1) comprenant une surface de contact et une surface arrière (2), possédant un dispositif de transmission de données (3, 6, 7, 8, 9, 10), le dispositif de transmission de données (3, 6, 7, 8, 9, 10) possédant au moins un capteur (6) doté d'une alimentation en énergie et au moins un lecteur externe (9),
**caractérisée en ce que** des surfaces de signal (3) espacées dans le sens de défilement de la courroie (1) sont disposées sur la surface arrière (2) de la courroie (1), et chaque surface de signal (3) peut être commutée par le capteur (6) soit dans un premier état actif, soit dans un deuxième état inactif, un signal positif pouvant être transmis dans le premier état actif et, dans le deuxième état inactif, soit un signal négatif pouvant être transmis, soit aucun signal ne pouvant être transmis, et l'état respectif des surfaces de signal (3) avec la courroie (1) en mouvement pouvant être détecté par le lecteur externe (9) lors du passage devant celui-ci.

2. Courroie (1) selon la revendication 1, **caractérisée en ce que** la courroie (1) possède en plus une surface de référence (8) sur la surface arrière (2) et une tension électrique peut respectivement être appliquée par le capteur (6) entre la surface de référence (8) et l'une des surfaces de signal (3) individuelles, chaque surface de signal (3) soumise à une tension étant commutée dans l'état actif et chaque surface de signal (3) non soumise à une tension étant commutée dans l'état inactif.

3. Courroie (1) selon la revendication 2, **caractérisée en ce que** la tension électrique est une tension continue.

4. Courroie (1) selon la revendication 2, **caractérisée en ce que** la tension électrique est une tension alternative ayant une fréquence d'alternance prédéterminée.

5. Courroie (1) selon la revendication 1, **caractérisée en ce que** les surfaces de contact (3) sont réalisées magnétisables, la polarisation des surfaces de contact (3) magnétisables pouvant être inversée par le capteur (6) et une polarisation prédéfinie des surfaces de contact (3) individuelles étant associée à l'état activé de la surface de contact (3) concernée.

6. Courroie (1) selon la revendication 1, **caractérisée en ce que** les surfaces de contact (3) sont réalisées optiquement réfléchissantes et sont revêtues d'une couche de pigments électriquement conductrice, l'orientation des pigments pouvant être modifiée par application d'une tension électrique aux pigments.

7. Courroie (1) selon la revendication 1, **caractérisée en ce que** les surfaces de contact (3) sont des diodes électroluminescentes.

8. Courroie (1) selon au moins l'une des revendications précédentes, **caractérisée en ce que** la courroie (1) possède une surface de déclenchement supplémentaire qui est disposée sur la surface arrière (2) de la courroie (1) avant les surfaces de signal (3) dans le sens de défilement et par le biais de laquelle le capteur (6) peut être excité pendant une durée prédéterminée en vue de délivrer des signaux de commande aux surfaces de signal (3) lors du passage de la surface de déclenchement devant le lecteur (9).
